# EUROPEAN PATENT SPECIFICATION

(11) **EP 3 015 779 B1**
(45) Date of publication and mention of the grant of the patent: **11.05.2022**
(21) Application number: 15189895.4
(22) Date of filing: 15.10.2015
(51) Int. Cl.: F24F 11/30, F24F 110/50, F24F 110/52, F24F 3/16, F24F 8/00

(54) **AIR PURIFICATION PROMPTING METHOD AND APPARATUS, AND USER EQUIPMENT**
LUFTREINIGUNGSAUFFORDERUNGSVERFAHREN UND -VORRICHTUNG SOWIE BENUTZERGERÄT
PROCÉDÉ ET APPAREIL D'ANNONCE DE PURIFICATION D'AIR ET ÉQUIPEMENT UTILISATEUR

(30) Priority: 29.10.2014 CN 201410594608
(43) Date of publication of application: 04.05.2016
(73) Proprietor: Xiaomi Inc., Beijing 100085 (CN)
(72) Inventor: FU, Qiang, 100085 BEIJING (CN); ZHANG, Bin, 100085 BEIJING (CN); HU, Yunlin, 100085 BEIJING (CN)
(74) Representative: Cabinet Beau de Loménie

(56) References cited:
- WO-A1-2014/089785
- CN-A- 103 245 009
- CN-A- 103 615 790
- CN-A- 103 836 775
- CN-U- 203 848 452
- CN-U- 203 880 877
- KR-A- 20090 007 947

## Description

### TECHNICAL FIELD

The present invention relates to an air purification prompting method and a user equipment, and more particularly, to an air purification prompting method and apparatus which determine a corresponding prompt type according to air quality data inside and outside a space where an air purifier is deployed, and a user equipment.

### BACKGROUND

Air purifiers are household electrical appliances for air purification. With the smog weather being more frequent, the public is more concerned about air quality, and thus air purifiers are more extensively used.

However, conventional air purifiers lack smart prompting functions. Such lacks restrict application thereof, and affect user experience. In the related art, a display screen or a loudspeaker module is typically configured on the air purifier, and related information is prompted to a user in a manner of displaying such information on the display screen or outputting a sound prompt. The user needs to get close to the air purifier to view or catch such related information. Upon acquiring prompting information, the user also needs to approach the air purifier to perform corresponding control operations. In addition, in the related art, the air purifier needs to detect air quality therearound after being started, and then prompt air quality data to the user. The user needs to judge the air quality data by himself or herself, and then determine a corresponding operation, and manually perform a corresponding control operation. Accordingly, the operations are inconvenient.

Document WO 2014/089785 relates to a vehicle conditioner device. Document CN 203 848 452 U discloses an air purifier comprising a display provided with a warning device, wherein an indoor air quality index is monitored within a space where the air purifier is placed and if the quality index exceeds a predetermined value, the user is prompted by an indicator lamp and music.

### SUMMARY

To solve the problems present in the related art, the present invention provides an air purification prompting method as defined in claim 1, a user equipment as defined in claim 5, a computer program as defined in claim 8 and a recording medium as defined in claim 9. Preferred embodiments of the invention are defined in the dependent claims.

According to a first aspect, the invention relates to an air purification prompting method as defined in claim 1. The air purification prompting method comprises: acquiring air quality data, the air quality data comprising the following data: air quality data inside a space where an air purifier is deployed, and air quality data outside the space where the air purifier is deployed; and determining whether to make a prompt according to the air quality data.

In the air purification prompting method, the step of determining whether to make a prompt according to the air quality data comprises: determining to make a first type prompt if it is determined according to the air quality data that air quality outside the space where the air purifier is deployed is better than air quality inside the space where the air purifier is deployed, the air quality outside the space where the air purifier is deployed is better than a predetermined value, and the air purifier is in a running state.

In the air purification prompting method, the step of determining whether to make a prompt according to the air quality data comprises: determining to make a second type prompt if it is determined according to the air quality data that air quality inside the space where the air purifier is deployed is poorer than a predetermined value and the air purifier is in a non-running state.

In the air purification prompting method, the step of determining whether to make a prompt according to the air quality data comprises: determining to make a third type prompt if, after the air purifier is started and has run for a predetermined time period, it is determined according to the air quality data that air quality inside the space where the air purifier is deployed is still poorer than a predetermined value.

Optionally, in the air purification prompting method, the air quality data is acquired in any of the following manners: acquiring the air quality data inside the space where the air purifier is deployed and the air quality data outside the space where the air purifier is deployed via an air quality sensor; acquiring in real time the air quality data outside the space where the air purifier is deployed over the Internet, and acquiring the air quality data inside the space where the air purifier is deployed via an air quality sensor.

The air purification prompting method further comprises: sending corresponding prompting information when it is determined to make a prompt.

Optionally, in the air purification prompting method, the prompt is configured according to any one or more of the following items: one prompt within one day, multiple prompts within one day, no prompt within one day, and no prompt within a specified time period.

The air purification prompting method is performed by a user equipment, the user equipment may be any one or more of the following equipments: a mobile phone, a computer, a digital broadcast terminal, a messaging device, a gaming console, a tablet, a medical device, an exercise equipment, and a personal digital assistant.

According to a second aspect, the invention relates to a user equipment comprising an air purification prompting apparatus, wherein the air purification prompting apparatus comprises: an acquiring module, configured to acquire air quality data, the air quality data comprising at least one of the following data: air quality data inside a space where an air purifier is deployed, and air quality data outside the space where the air purifier is deployed; and a determining module, configured to determine whether to make a prompt according to the air quality data.

According to the second aspect of the invention, in the air purification prompting apparatus, the determining module determines to make a first type prompt if it is determined according to the air quality data that air quality outside the space where the air purifier is deployed is better than air quality inside the space where the air purifier is deployed, the air quality outside the space where the air purifier is deployed is better than a predetermined value, and the air purifier is in a running state.

According to the second aspect of the invention, in the air purification prompting apparatus, the determining module determines to make a second type prompt if it is determined according to the air quality data that air quality inside the space where the air purifier is deployed is poorer than a predetermined value and the air purifier is in a non-running state.

According to the second aspect of the invention, in the air purification prompting apparatus, the determining module determines to make a third type prompt if, after the air purifier is started and has run for a predetermined time period, it is determined according to the air quality data that air quality inside the space where the air purifier is deployed is still poorer than a predetermined value.

Optionally, in the air purification prompting apparatus, the air quality data is acquired in any of the following manners: acquiring, by the acquiring module, the air quality data inside the space where the air purifier is deployed and the air quality data outside the space where the air purifier is deployed via an air quality sensor; acquiring in real time, by the acquiring module, the air quality data outside the space where the air purifier is deployed over the Internet, and acquiring, by the acquiring module, the air quality data inside the space where the air purifier is deployed via an air quality sensor.

According to the second aspect of the invention, the air purification prompting apparatus further comprises: a prompting module, configured to send corresponding prompting information when it is determined to make a prompt.

According to the second aspect of the invention, the air purification prompting apparatus is further connectable to or comprises a control module, the control module being configured to perform any one or more of the following control operations according to an instruction of a user: Such control operations may include controlling On/Off of the air purifier, adjusting a running state of the air purifier, and controlling opening and closing of doors and windows in the space where the air purifier is deployed.

Optionally, in the air purification prompting apparatus, the prompt is configured according to any one or more of the following items: one prompt within one day, multiple prompts within one day, no prompt within one day, and no prompt within a specified time period.

According to the second aspect of the invention, the air purification prompting apparatus is configured in a user equipment, the user equipment may be any one or more of the following equipments: a mobile phone, a computer, a digital broadcast terminal, a messaging device, a gaming console, a tablet, a medical device, an exercise equipment, and a personal digital assistant.

According to a third aspect, the invention is also directed to a computer program for executing the steps of an air purification prompting method as described above when this program is executed on a user equipment.

This program can use any programming language and take the form of source code, object code or a code intermediate between source code and object code, such as a partially compiled form, or any other desirable form.

According to a fourth aspect, the invention is directed to a computer-readable information medium containing instructions of a computer program according to the third aspect of the invention.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions of the embodiments of the present invention achieve the following beneficial effects: it is determined whether to make a prompt according to the air quality data inside and outside the space where the air purifier is deployed, and a prompt type is determined when it is determined to make a prompt; as such, a user is capable of performing a corresponding control operation according to a practical prompt type; and the operation is more convenient, and user experience is improved.

It shall be appreciated that the above general description and the detailed description hereinafter are only illustrative and interpretative, but not for limiting the present invention.

### BRIEF DESCRIPTION OF THE DRAWINGS

The accompanying drawings herein, which are incorporated into and constitute a part of the specification, illustrate embodiments consistent with the present invention, and together with the description, serve to explain the principles of the present invention.
FIG. 1 is a flowchart illustrating some steps of an air purification prompting method according to an exemplary embodiment of the present invention;
FIG. 2 is a block diagram illustrating an air purification prompting apparatus forming part of a user equipment according to an exemplary embodiment of the present invention;
FIG. 3 is a block diagram illustrating an air purification system comprising a user equipment according to an exemplary embodiment of the present invention and an air purifier;
FIG. 4 is a block diagram illustrating an apparatus 400 for performing the air purification prompting method according to an exemplary embodiment of the present invention; and
FIG. 5 is a block diagram illustrating an apparatus 500 for performing the air purification prompting method according to an exemplary embodiment of the present invention.

### DETAILED DESCRIPTION

Reference will now be made in detail to exemplary embodiments, examples of which being illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

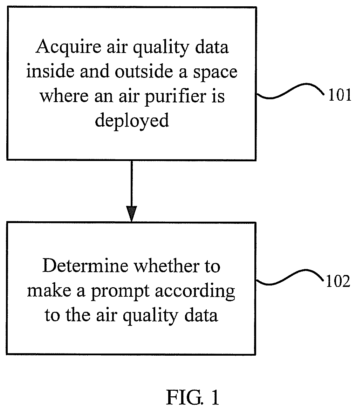

FIG. 1 is a flowchart illustrating some steps of an air purification prompting method according to an exemplary embodiment of the present invention.

As illustrated in FIG. 1, an air purification prompting method includes the following steps:
acquiring (101) air quality data, the air quality data including at least one of the following data: air quality data inside a space where an air purifier is deployed, and air quality data outside the space where the air purifier is deployed; and determining (102) whether to make a prompt according to the air quality data.

In the air purification prompting method, the step 102 of determining whether to make a prompt according to the air quality data includes: determining to make a first type prompt if it is determined according to the air quality data that air quality outside the space where the air purifier is deployed is better than air quality inside the space where the air purifier is deployed, that the air quality outside the space where the air purifier is deployed is better than a predetermined value, and that the air purifier is in a running state.

In the air purification prompting method, the step 102 of determining whether to make a prompt according to the air quality data includes: determining to make a second type prompt if it is determined according to the air quality data that air quality inside the space where the air purifier is deployed is poorer than a predetermined value and that the air purifier is in a non-running state.

In the air purification prompting method, the step 102 of determining whether to make a prompt according to the air quality data includes: determining to make a third type prompt if, after the air purifier is started and has run for a predetermined time period, it is determined according to the air quality data that air quality inside the space where the air purifier is deployed is still poorer than a predetermined value.

Optionally, in the air purification prompting method, the air quality data is acquired in any of the following manners: acquiring the air quality data inside the space where the air purifier is deployed and the air quality data outside the space where the air purifier is deployed via an air quality sensor; acquiring in real time the air quality data outside the space where the air purifier is deployed over the Internet, and acquiring the air quality data inside the space where the air purifier is deployed via an air quality sensor.

The air purification prompting method further includes: sending corresponding prompting information when it is determined to make a prompt. The prompting information may be: a change of the color of the user interface, an image prompt, a text prompt, a sound prompt, or the like.

The air purification prompting method further enables the user to select control operations according to the prompting information. Such control operations may include:
controlling On/Off of the air purifier, adjusting a running state of the air purifier, and controlling opening and closing of windows in a room of the user.

Optionally, in the air purification prompting method, the prompt is configured according to any one or more of the following items: one prompt within one day, multiple prompts within one day, no prompt within one day, and no prompt within a specified time period (for example, a time period from 22:00 to 8:00).

According to the first aspect of the invention, the air purification prompting method is performed by a user equipment, and the user equipment may be any one or more of the following equipments: a mobile phone, a computer, a digital broadcast terminal, a messaging device, a gaming console, a tablet, a medical device, an exercise equipment, a personal digital assistant, and the like. The user equipment acquires air quality data, the air quality data including the following data: air quality data inside a space where an air purifier is deployed, and air quality data outside the space where the air purifier is deployed; and the user equipment determines whether to make a prompt according to the air quality data. Optionally, the user equipment may acquire the air quality data inside the space where the air purifier is deployed and the air quality data outside the space where the air purifier is deployed via an air quality sensor. Optionally, the user equipment may acquire in real time the air quality data outside the space where the air purifier is deployed over the Internet, and acquire the air quality data inside the space where the air purifier is deployed via an air quality sensor. Optionally, the user equipment may send corresponding prompting information when it is determined to make a prompt. Optionally, a user may select, via the user equipment, any one or more of the following control operations according to the prompting information: controlling On/Off of the air purifier, adjusting a running state of the air purifier, and controlling opening and closing of windows in a room of the user. Optionally, in the air purification prompting method, by configuration in the user equipment, the prompt may be configured according to any one or more of the following items: one prompt within one day, multiple prompts within one day, no prompt within one day, and no prompt within a specified time period (for example, a time period from 22:00 to 8:00).

Optionally, the space where the air purifier is deployed may be: in a room, in a house, in a corridor, in a car, or in any other place where air purification is desired.

The user equipment is connected in a wired manner or wireless manner to the air purifier and optionally to doors and windows of the space where the air purifier is deployed.

The air purifier is deployed indoors, and the user equipment acquires outdoor and indoor air quality data. The user equipment determines to make a first type prompt (which is optionally named as a "blue sky prompt") if it is determined according to the air quality data that outdoor air quality is better than indoor air quality, that the outdoor air quality is better than a predetermined value (for example, an outdoor air quality index is lower than 30, then it is considered that the outdoor air quality is better than the predetermined value), and that the air purifier is in a running state. In this case, the user equipment may prompt the user to turn off the air purifier and open the doors and windows via a change of the color of the user interface, an image-text prompt, a sound prompt, or the like.

The air purifier is deployed indoors, and the user equipment acquires indoor air quality data. The user equipment determines to make a second type prompt (which is optionally named as a "pollution prompt") if it is determined according to the air quality data that indoor air quality is poorer than a predetermined value (for example, an indoor air quality index is higher than a preset value, then it is considered that the indoor air quality is poorer than the predetermined value), and that the air purifier is in a non-running state. In this case, the user equipment may prompt the user to turn on the air purifier and close the doors and windows via a change of the color of the user interface, an image-text prompt, a sound prompt, or the like.

The air purifier is deployed indoors, and the user equipment acquires indoor air quality data. It is considered that the air purifier achieves no effect because the air purifier is running abnormally or the doors and windows are not closed, and the user equipment determines to make a third type prompt (which is optionally named as a "running abnormity prompt") if, after the air purifier is started and has run for a predetermined time period (for example, the air purifier has run for 1 hour), it is determined according to the air quality data that indoor air quality is still poorer than a predetermined value (for example, an indoor air quality index is higher than a preset value). In this case, the user equipment may prompt the user to check the states of the air purifier and the doors and windows via a change of the color of the user interface, an image-text prompt, a sound prompt, or the like.

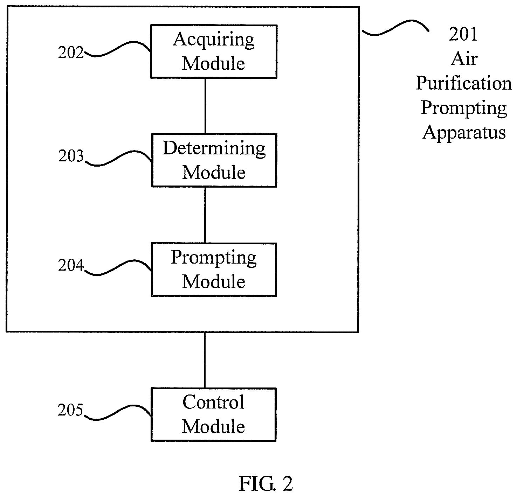

FIG. 2 is a block diagram illustrating an air purification prompting apparatus 201 forming part of a user equipment according to an exemplary embodiment of the present invention.

Referring to FIG. 2, the air purification prompting apparatus 201 includes:
an acquiring module 202, configured to acquire air quality data, the air quality data including at least one of the following data: air quality data inside a space where an air purifier is deployed, and air quality data outside the space where the air purifier is deployed; and a determining module 203, configured to determine whether to make a prompt according to the air quality data.

In the air purification prompting apparatus, the step of determining whether to make a prompt according to the air quality data includes: determining to make a first type prompt if it is determined according to the air quality data that air quality outside the space where the air purifier is deployed is better than air quality inside the space where the air purifier is deployed, the air quality outside the space where the air purifier is deployed is better than a predetermined value, and the air purifier is in a running state.

In the air purification prompting apparatus, the step of determining whether to make a prompt according to the air quality data includes: determining to make a second type prompt if it is determined according to the air quality data that air quality inside the space where the air purifier is deployed is poorer than a predetermined value and the air purifier is in a non-running state.

In the air purification prompting apparatus, the step of determining whether to make a prompt according to the air quality data includes: determining to make a third type prompt if, after the air purifier is started and has run for a predetermined time period, it is determined according to the air quality data that air quality inside the space where the air purifier is deployed is still poorer than a predetermined value.

Optionally, in the air purification prompting apparatus, the air quality data is acquired in any of the following manners: acquiring, by the acquiring module 202, the air quality data inside the space where the air purifier is deployed and the air quality data outside the space where the air purifier is deployed via an air quality sensor; acquiring in real time, by the acquiring module 202, the air quality data outside the space where the air purifier is deployed over the Internet, and acquiring, by the acquiring module 202, the air quality data inside the space where the air purifier is deployed via an air quality sensor.

The air purification prompting apparatus 201 further includes: a prompting module 204, configured to send corresponding prompting information when it is determined to make a prompt.

Optionally, the air purification prompting apparatus 201 is further connected to a control module 205, the control module 205 being configured to perform any one or more of the following control operations according to an instruction of a user: controlling On/Off of the air purifier, adjusting a running state of the air purifier, and controlling opening and closing of doors and windows in the space where the air purifier is deployed.

Optionally, in the air purification prompting apparatus 201, the prompt is configured according to any one or more of the following items: one prompt within one day, multiple prompts within one day, no prompt within one day, and no prompt within a specified time period (for example, a time period from 22:00 to 8:00).

The air purification prompting apparatus 201 is configured in a user equipment, and the user equipment may be any one or more of the following equipments: a mobile phone, a computer, a digital broadcast terminal, a messaging device, a gaming console, a tablet, a medical device, an exercise equipment, a personal digital assistant, and the like. Optionally, the user equipment may further include a control module. The control module is configured to perform any one or more of the following control operations according to an instruction of a user: controlling On/Off of the air purifier, adjusting a running state of the air purifier, and controlling opening and closing of doors and windows in the space where the air purifier is deployed. Optionally, the user may perform the control operations on the user equipment; and the control module in the user equipment receives an instruction from the user, and performs, according to the instruction of the user, such operations as controlling On/Off of the air purifier, adjusting a running state of the air purifier, controlling opening and closing of doors and windows in the space where the air purifier is deployed, and the like.

Optionally, the space where the air purifier is deployed may be: in a room, in a house, in a corridor, in a car, or in any other place where air purification is desired.

The user equipment is connected in a wired manner or wireless manner to the air purifier and optionally connected to doors and windows of the space where the air purifier is deployed.

For example, the air purifier is deployed indoors, and the acquiring module 202 acquires outdoor and indoor air quality data. The determining module 203 determines to make a first type prompt (which is optionally named as a "blue sky prompt") if it is determined by the determining module 203 in the user equipment according to the air quality data that outdoor air quality is better than indoor air quality, and the outdoor air quality is better than a predetermined value (for example, an outdoor air quality index is lower than 30, then it is considered that the outdoor air quality is better than the predetermined value), and the air purifier is in a running state. In this case, the prompting module 204 may prompt the user to turn off the air purifier and open the doors and windows via a change of the color of the user interface, an image-text prompt, a sound prompt, or the like.

For example, the air purifier is deployed indoors, and the acquiring module 202 acquires indoor air quality data. The determining module 203 determines to make a second type prompt (which is optionally named as a "pollution prompt") if it is determined by the determining module 203 in the user equipment according to the air quality data that indoor air quality is poorer than a predetermined value (for example, an indoor air quality index is higher than a preset value, then it is considered that the indoor air quality is poorer than the predetermined value), and the air purifier is in a non-running state. In this case, the prompting module 204 may prompt the user to turn on the air purifier and close the doors and windows via a change of the color of the user interface, an image-text prompt, a sound prompt, or the like.

For example, the air purifier is deployed indoors, and the acquiring module 202 acquires indoor air quality data. It is considered that the air purifier achieves no effect because the air purifier is running abnormally or the doors and windows are not closed, and the determining module 203 determines to make a third type prompt (which is optionally named as a "running abnormity prompt") if, after the air purifier is started and has run for a predetermined time period (for example, the air purifier has run for 1 hour), it is determined according to the air quality data that indoor air quality is still poorer than a predetermined value (for example, an indoor air quality index is higher than a preset value). In this case, the prompting module 204 may prompt the user to check the states of the air purifier and the doors and windows via a change of the color of the user interface, an image-text prompt, a sound prompt, or the like.

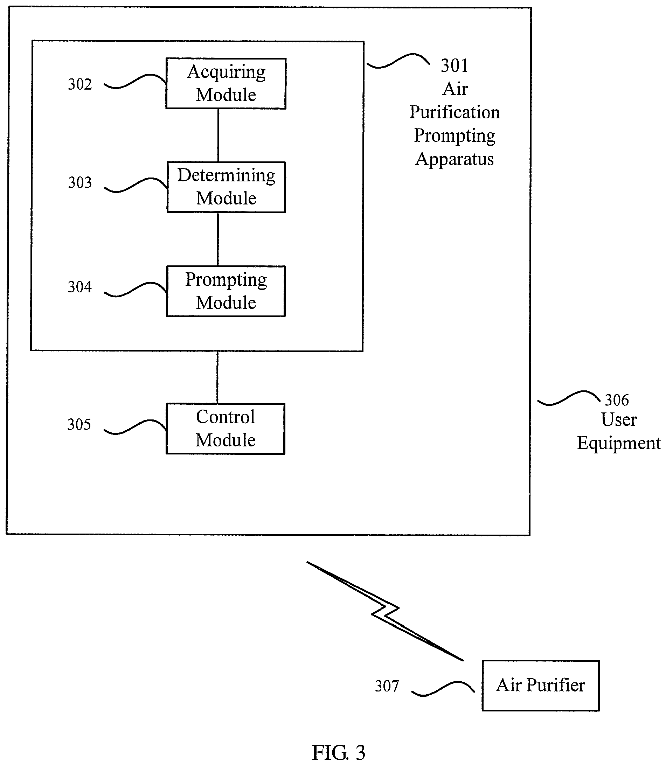

FIG. 3 is a block diagram illustrating an air purification system comprising a user equipment according to an exemplary embodiment of the present invention and an air purifier.

Referring to FIG. 3, the air purification system includes: an air purifier 307 and a user equipment 306. The user equipment 306 includes: an air purification prompting apparatus 301 as defined in the above embodiment; and a control module 305, configured to perform any one or more of the following control operations according to an instruction of a user: controlling On/Off of the air purifier, adjusting a running state of the air purifier, and controlling opening and closing of doors and windows in the space where the air purifier is deployed.

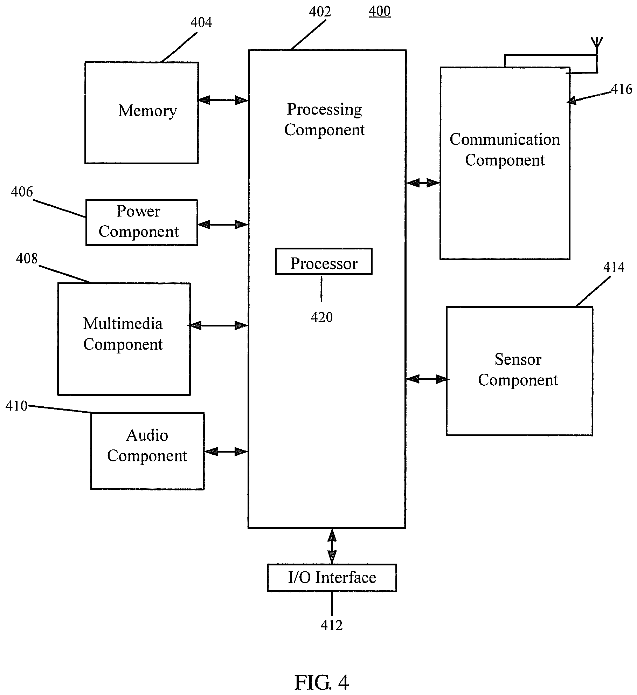

FIG. 4 is a block diagram illustrating an apparatus 400 for performing the air purification prompting method according to an exemplary embodiment of the present invention. For example, the apparatus 400 may be a mobile phone, a computer, a digital broadcast terminal, a messaging device, a gaming console, a tablet, a medical device, an exercise equipment, a personal digital assistant, and the like.

Referring to FIG. 4, the apparatus 400 may include one or more of the following components: a processing component 402, a memory 404, a power component 406, a multimedia component 408, an audio component 410, an input/output (I/O) interface 412, a sensor component 414, and a communication component 416.

The processing component 402 typically controls overall operations of the apparatus 400, such as the operations associated with display, telephone calls, data communications, camera operations, and recording operations. The processing component 402 may include one or more processors 420 to execute instructions to perform all or a part of the steps in the above-described methods. In addition, the processing component 402 may include one or more modules which facilitate the interaction between the processing component 402 and other components. For example, the processing component 402 may include a multimedia module to facilitate the interaction between the multimedia component 408 and the processing component 402.

The memory 404 is configured to store various types of data to support the operations of the apparatus 400. Examples of such data include instructions for any application or method operated on the apparatus 400, contact data, phonebook data, messages, pictures, videos, and the like. The memory 404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 406 provides power to various components of the apparatus 400. The power component 406 may include a power management system, one or more power supplies, and other components associated with the generation, management, and distribution of power in the apparatus 400.

The multimedia component 408 includes a screen providing an output interface between the apparatus 400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 408 includes a front camera or/and a rear camera. The front camera and/or the rear camera may receive external multimedia data when the apparatus 400 is in an operation mode, such as a photographing mode or a video mode. Each of the front camera and the rear camera may be a fixed optical lens system or have focus and optical zoom capability.

The audio component 410 is configured to output or/and input audio signals. For example, the audio component 410 includes a microphone (MIC) configured to receive an external audio signal when the apparatus 400 is in an operation mode, such as a call mode, a recording mode, or a voice recognition mode. The received audio signal may be further stored in the memory 404 or transmitted via the communication component 416. In some embodiments, the audio component 410 further includes a speaker to output audio signals.

The I/O interface 412 provides an interface between the processing component 402 and a peripheral interface module, such as a keyboard, a click wheel, a button, or the like. The buttons may include, but are not limited to, a home button, a volume button, a starting button, and a locking button.

The sensor component 414 includes one or more sensors to provide status assessments of various aspects of the apparatus 400. For example, the sensor component 414 may detect an open/closed status of the apparatus 400, relative positioning of components, e.g., the display and the keypad, of the apparatus 400, a change in position of the apparatus 400 or a component of the apparatus 400, a presence or absence of user contact with the apparatus 400, an orientation or an acceleration/deceleration of the apparatus 400, and a change in temperature of the apparatus 400. The sensor component 414 may include a proximity sensor configured to detect the presence of nearby objects without any physical contact. The sensor component 414 may also include a light sensor, such as a CMOS or CCD image sensor, for use in imaging applications. In some embodiments, the sensor component 414 may also include an accelerometer sensor, a gyroscope sensor, a magnetic sensor, a pressure sensor, or a temperature sensor.

The communication component 416 is configured to facilitate communications, wired or wirelessly, between the apparatus 400 and other devices. The apparatus 400 may access a wireless network based on a communication standard, such as WiFi, 2G, or 3G, or a combination thereof. In one exemplary embodiment, the communication component 416 receives a broadcast signal or broadcast associated information from an external broadcast management system via a broadcast channel. In one exemplary embodiment, the communication component 416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above-described methods.

In exemplary embodiments, there is also provided a non-transitory computer-readable storage medium including instructions, such as included in the memory 404, executable by the processor 420 in the apparatus 400, for performing the above-described methods. For example, the non-transitory computer-readable storage medium may be a ROM, a random access memory (RAM), a compact disc read-only memory (CD-ROM), a magnetic tape, a floppy disc, an optical data storage device, or the like.

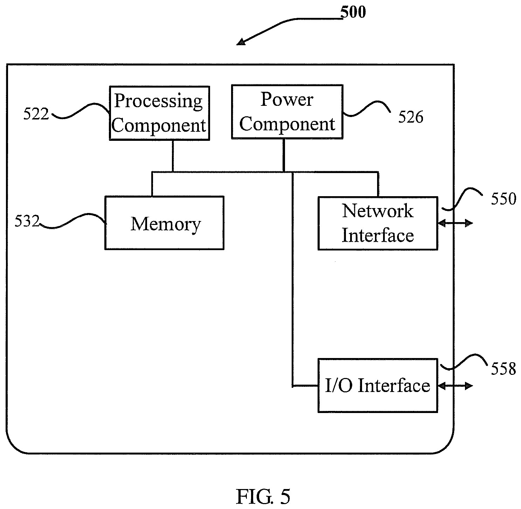

FIG. 5 is a block diagram illustrating an apparatus 500 for performing the air purification prompting method according to an exemplary embodiment of the present invention. For example, the apparatus 500 may be provided as a server. Referring to FIG. 5, the apparatus 500 includes a processing component 522, which further includes one or more processors and memory resources represented by a memory 532, configured to store instructions executable by the processing component 522, for example, applications. The applications stored in the memory 532 may include one or more than one module each corresponding to a group of instructions. In addition, the processing component 522 is configured to execute the instructions, to perform the above air purification prompting methods.

The apparatus 500 may further include: a power component 526, configured to perform power management in the apparatus 500; a wired or wireless network interface 550, configured to connect the apparatus 500 to the network; and an input/output (I/O) interface 558. The apparatus 500 may operate an operating system stored in the memory 532, for example, Windows ServerTM, Mac OS XTM, UnixTM, LinuxTM, FreeBSDTM, or the like.

Other embodiments of the present invention will be apparent to those skilled in the art from consideration of the specification and practice disclosed herein. This application is intended to cover any variations, uses, or adaptations of the present invention following the general principles thereof and including such departures from the present invention as coming within common knowledge or customary technical means in the art. It is intended that the specification and embodiments be considered as exemplary only, with a true scope of the present invention being indicated by the appended claims.

It will be appreciated that the present invention is not limited to the exact construction that has been described above and illustrated in the accompanying drawings, and that various modifications and changes can be made without departing from the scope thereof. The scope of the present invention is only defined by the appended claims.

## Claims

1. An air purification prompting method, **characterized in that** the method comprises:
acquiring (101) air quality data, the air quality data comprising the following data: air quality data inside a space where an air purifier is deployed, and air quality data outside the space where the air purifier is deployed; and
determining (102) whether to make a prompt according to the air quality data;
sending corresponding prompting information when it is determined to make a prompt;
wherein the air purification prompting method is performed by a user equipment connected in a wired manner or wireless manner to the air purifier,
wherein the step (102) of determining whether to make a prompt according to the air quality data comprises: determining to make a first type prompt if it is determined according to the air quality data that air quality outside the space where the air purifier is deployed is better than air quality inside the space where the air purifier is deployed, the air quality outside the space where the air purifier is deployed is better than a predetermined value, and the air purifier is in a running state; or
determining to make a second type prompt if it is determined according to the air quality data that air quality inside the space where the air purifier is deployed is poorer than a predetermined value and the air purifier is in a non-running state; or
determining to make a third type prompt if, after the air purifier is started and has run for a predetermined time period, it is determined according to the air quality data that air quality inside the space where the air purifier is deployed is still poorer than a predetermined value,
wherein the first type prompt is configured to prompt the user to turn off the air purifier and open a door and a window, the second type prompt is configured to prompt the user to turn on the air purifier and close the door and the window, and the third type prompt is configured to prompt the user to check states of the air purifier, the door and the window, enabling a user to perform a corresponding control operations according to a practical prompt type.

2. The air purification prompting method according to claim 1, wherein the air quality data is acquired in any of the following manners: acquiring the air quality data inside the space where the air purifier is deployed and the air quality data outside the space where the air purifier is deployed via an air quality sensor; acquiring in real time the air quality data outside the space where the air purifier is deployed over the Internet, and acquiring the air quality data inside the space where the air purifier is deployed via an air quality sensor.

3. The air purification prompting method according to claim 1 or 2, wherein the prompt is configured according to any one or more of the following items: one prompt within one day, multiple prompts within one day, no prompt within one day, and no prompt within a specified time period.

4. The air purification prompting method according to any one of claims 1 to 3, wherein the user equipment being any one or more of the following equipments: a mobile phone, a computer, a digital broadcast terminal, a messaging device, a gaming console, a tablet, a medical device, an exercise equipment, and a personal digital assistant.

5. A user equipment comprising an air purification prompting apparatus (201, 301), **characterized in that** the apparatus comprises:
an acquiring module (202, 302), configured to acquire air quality data, the air quality data comprising the following data: air quality data inside a space where an air purifier is deployed, and air quality data outside the space where the air purifier is deployed; and
a determining module (203, 303), configured to determine whether to make a prompt according to the air quality data,
a prompting module (204, 304), configured to send corresponding prompting information when it is determined to make a prompt,
wherein the user equipment is connectable to or comprises a control module (205, 305), the control module (205, 305) being configured to perform control operations according to an instruction of a user,
wherein the user equipment is connected in a wired manner or wireless manner to the air purifier,
wherein the determining module (203, 303) determines to make a first type prompt if it is determined according to the air quality data that air quality outside the space where the air purifier is deployed is better than air quality inside the space where the air purifier is deployed, the air quality outside the space where the air purifier is deployed is better than a predetermined value, and the air purifier is in a running state; or
determines to make a second type prompt if it is determined according to the air quality data that air quality inside the space where the air purifier is deployed is poorer than a predetermined value and the air purifier is in a non-running state; or
determines to make a third type prompt if, after the air purifier is started and has run for a predetermined time period, it is determined according to the air quality data that air quality inside the space where the air purifier is deployed is still poorer than a predetermined value,
wherein the first type prompt is configured to prompt the user to turn off the air purifier and open a door and a window, the second type prompt is configured to prompt the user to turn on the air purifier and close the door and the window, and the third type prompt is configured to prompt the user to check states of the air purifier, the door and the window.

6. The user equipment according to claim 5, wherein the air quality data is acquired in any of the following manners: acquiring, by the acquiring module (202, 302), the air quality data inside the space where the air purifier is deployed and the air quality data outside the space where the air purifier is deployed via an air quality sensor; acquiring in real time, by the acquiring module (202, 302), the air quality data outside the space where the air purifier is deployed over the Internet, and acquiring, by the acquiring module (202, 302), the air quality data inside the space where the air purifier is deployed via an air quality sensor.

7. The user equipment according to claim 5 or 6, wherein the prompt is configured according to any one or more of the following items: one prompt within one day, multiple prompts within one day, no prompt within one day, and no prompt within a specified time period.

8. A computer program, including instructions for executing the steps of an air purification prompting method according to any one of claims 1 to 4 on a user equipment.

9. A recording medium readable by a computer and having recorded thereon a computer program of claim 8.

## Patentansprüche

1. Verfahren zur Aufforderung zur Luftreinigung, **dadurch gekennzeichnet, dass** das Verfahren umfasst:
Erfassen (101) von Luftqualitätsdaten, wobei die Luftqualitätsdaten die folgenden Daten umfassen: Daten der Luftqualität in einem Raum, in dem ein Luftreiniger eingesetzt ist, und Daten der Luftqualität außerhalb des Raums, in dem der Luftreiniger eingesetzt ist; und
Bestimmen (102) anhand der Luftqualitätsdaten, ob eine Aufforderung erfolgen soll;
Senden der entsprechenden Aufforderungsinformationen, wenn bestimmt wird, dass eine Aufforderung erfolgen soll;
wobei das Verfahren zur Aufforderung zur Luftreinigung von einem Benutzergerät durchgeführt wird, das auf verdrahtete oder drahtlose Weise mit dem Luftreiniger verbunden ist,
wobei der Schritt (102) des Bestimmens anhand der Luftqualitätsdaten, ob eine Aufforderung erfolgen soll, Folgendes umfasst: Bestimmen, dass eine Aufforderung eines ersten Typs erfolgen soll, wenn anhand der Luftqualitätsdaten festgestellt wird, dass die Luftqualität außerhalb des Raums, in dem der Luftreiniger eingesetzt ist, besser ist als die Luftqualität in dem Raum, in dem der Luftreiniger eingesetzt ist, die Luftqualität außerhalb des Raums, in dem der Luftreiniger eingesetzt ist, besser ist als ein vorbestimmter Wert, und der Luftreiniger sich in einem Betriebszustand befindet; oder
Bestimmen, dass eine Aufforderung eines zweiten Typs erfolgen soll, wenn anhand der Luftqualitätsdaten festgestellt wird, dass die Luftqualität in dem Raum, in dem der Luftreiniger eingesetzt ist, schlechter als ein vorbestimmter Wert ist und der Luftreiniger sich in einem Nicht-Betriebszustand befindet; oder
Bestimmen, dass eine Aufforderung eines dritten Typs erfolgen soll, wenn, nachdem der Luftreiniger gestartet wurde und eine vorbestimmte Zeitspanne lang gelaufen ist, anhand der Luftqualitätsdaten festgestellt wird, dass die Luftqualität in dem Raum, in dem der Luftreiniger eingesetzt ist, immer noch schlechter ist als ein vorbestimmter Wert,
wobei die Aufforderung des ersten Typs so konfiguriert ist, dass sie den Benutzer auffordert, den Luftreiniger auszuschalten und eine Tür und ein Fenster zu öffnen, die Aufforderung des zweiten Typs so konfiguriert ist, dass sie den Benutzer auffordert, den Luftreiniger einzuschalten und die Tür und das Fenster zu schließen, und die Aufforderung des dritten Typs so konfiguriert ist, dass sie den Benutzer auffordert, die Zustände des Luftreinigers, der Tür und des Fensters zu überprüfen, wodurch ein Benutzer in die Lage versetzt wird, einen entsprechenden Steuervorgang gemäß einem zweckmäßigen Aufforderungstyp durchzuführen.

2. Verfahren zur Aufforderung zur Luftreinigung nach Anspruch 1, wobei die Luftqualitätsdaten auf eine der folgenden Arten erfasst werden: Erfassen der Daten der Luftqualität in dem Raum, in dem der Luftreiniger eingesetzt ist, und der Daten der Luftqualität außerhalb des Raums, in dem der Luftreiniger eingesetzt ist, über einen Luftqualitätssensor; Erfassen der Daten der Luftqualität außerhalb des Raums, in dem der Luftreiniger eingesetzt ist, in Echtzeit über das Internet, und Erfassen der Daten der Luftqualität in dem Raum, in dem der Luftreiniger eingesetzt ist, über einen Luftqualitätssensor.

3. Verfahren zur Aufforderung zur Luftreinigung nach Anspruch 1 oder 2, wobei die Aufforderung nach einem oder mehreren der folgenden Punkte konfiguriert ist: eine Aufforderung innerhalb eines Tages, mehrere Aufforderungen innerhalb eines Tages, keine Aufforderung innerhalb eines Tages und keine Aufforderung innerhalb einer bestimmten Zeitspanne.

4. Verfahren zur Aufforderung zur Luftreinigung nach einem der Ansprüche 1 bis 3, wobei es sich bei dem Benutzergerät um eines oder mehrere der folgenden Geräte handelt: ein Mobiltelefon, einen Computer, ein digitales Rundfunkendgerät, ein Nachrichtenübermittlungsgerät, eine Spielkonsole, ein Tablet, ein medizinisches Gerät, ein Trainingsgerät und einen persönlichen digitalen Assistenten.

5. Benutzergerät umfassend eine Luftreinigungsaufforderungsvorrichtung (201, 301), **dadurch gekennzeichnet, dass** die Vorrichtung umfasst:
ein Erfassungsmodul (202, 302), das konfiguriert ist, um Luftqualitätsdaten zu erfassen, wobei die Luftqualitätsdaten die folgenden Daten umfassen: Daten der Luftqualität in einem Raum, in dem ein Luftreiniger eingesetzt ist, und Daten der Luftqualität außerhalb des Raums, in dem der Luftreiniger eingesetzt ist; und
ein Bestimmungsmodul (203, 303), das konfiguriert ist, um anhand der Luftqualitätsdaten zu bestimmen, ob eine Aufforderung erfolgen soll,
ein Aufforderungsmodul (204, 304), das konfiguriert ist, um entsprechende Aufforderungsinformationen zu senden, wenn bestimmt wird, dass eine Aufforderung erfolgen soll,
wobei das Benutzergerät mit einem Steuermodul (205, 305) verbunden werden kann oder ein solches umfasst, wobei das Steuermodul (205, 305) konfiguriert ist, um Steuervorgänge gemäß einer Anweisung eines Benutzers durchzuführen,
wobei das Benutzergerät auf verdrahtete oder drahtlose Weise mit dem Luftreiniger verbunden ist,
wobei das Bestimmungsmodul (203, 303) bestimmt, dass eine Aufforderung eines ersten Typs erfolgen soll, wenn anhand der Luftqualitätsdaten festgestellt wird, dass die Luftqualität außerhalb des Raums, in dem der Luftreiniger eingesetzt ist, besser ist als die Luftqualität in dem Raum, in dem der Luftreiniger eingesetzt ist, die Luftqualität außerhalb des Raums, in dem der Luftreiniger eingesetzt ist, besser ist als ein vorbestimmter Wert, und der Luftreiniger sich in einem Betriebszustand befindet; oder
bestimmt, dass eine Aufforderung eines zweiten Typs erfolgen soll, wenn anhand der Luftqualitätsdaten festgestellt wird, dass die Luftqualität in dem Raum, in dem der Luftreiniger eingesetzt ist, schlechter als ein vorbestimmter Wert ist und der Luftreiniger sich in einem Nicht-Betriebszustand befindet; oder
bestimmt, dass eine Aufforderung eines dritten Typs erfolgen soll, wenn, nachdem der Luftreiniger gestartet wurde und eine vorbestimmte Zeitspanne lang gelaufen ist, anhand der Luftqualitätsdaten festgestellt wird, dass die Luftqualität in dem Raum, in dem der Luftreiniger eingesetzt ist, immer noch schlechter ist als ein vorbestimmter Wert,
wobei die Aufforderung des ersten Typs so konfiguriert ist, dass sie den Benutzer auffordert, den Luftreiniger auszuschalten und eine Tür und ein Fenster zu öffnen, die Aufforderung des zweiten Typs so konfiguriert ist, dass sie den Benutzer auffordert, den Luftreiniger einzuschalten und die Tür und das Fenster zu schließen, und die Aufforderung des dritten Typs so konfiguriert ist, dass sie den Benutzer auffordert, die Zustände des Luftreinigers, der Tür und des Fensters zu überprüfen.

6. Benutzergerät nach Anspruch 5, wobei die Luftqualitätsdaten auf eine der folgenden Arten erfasst werden: Erfassen, durch das Erfassungsmodul (202, 302), der Daten der Luftqualität in dem Raum, in dem der Luftreiniger eingesetzt ist, und der Daten der Luftqualität außerhalb des Raums, in dem der Luftreiniger eingesetzt ist, über einen Luftqualitätssensor; Erfassen, durch das Erfassungsmodul (202, 302), der Daten der Luftqualität außerhalb des Raums, in dem der Luftreiniger eingesetzt ist, in Echtzeit über das Internet, und Erfassen, durch das Erfassungsmodul (202, 302), der Daten der Luftqualität in dem Raum, in dem der Luftreiniger eingesetzt ist, über einen Luftqualitätssensor.

7. Benutzergerät nach Anspruch 5 oder 6, wobei die Aufforderung nach einem oder mehreren der folgenden Punkte konfiguriert ist: eine Aufforderung innerhalb eines Tages, mehrere Aufforderungen innerhalb eines Tages, keine Aufforderung innerhalb eines Tages und keine Aufforderung innerhalb einer bestimmten Zeitspanne.

8. Computerprogramm mit Anweisungen zum Ausführen der Schritte eines Luftreinigungsaufforderungsverfahrens nach einem der Ansprüche 1 bis 4 auf einem Benutzergerät.

9. Aufzeichnungsmedium, das von einem Computer lesbar ist und auf dem ein Computerprogramm nach Anspruch 8 aufgezeichnet ist.

## Revendications

1. Procédé d'invitation à une purification de l'air, **caractérisé en ce que** le procédé comprend :
l'acquisition (101) de données de qualité de l'air, les données de qualité de l'air comprenant les données suivantes : des données de qualité de l'air à l'intérieur d'un espace où un purificateur d'air est déployé, et des données de qualité de l'air à l'extérieur de l'espace où le purificateur d'air est déployé ; et
la détermination (102) de s'il faut présenter une invitation selon les données de qualité de l'air ;
l'envoi d'informations d'invitation correspondantes lorsqu'il est déterminé qu'il faut présenter une invitation ;
dans lequel le procédé d'invitation à une purification de l'air est réalisé par un équipement utilisateur connecté d'une manière filaire ou d'une manière sans fil au purificateur d'air,
dans lequel l'étape (102) de détermination de s'il faut présenter une invitation selon les données de qualité de l'air comprend : la détermination de présenter une invitation de premier type s'il est déterminé selon les données de qualité de l'air qu'une qualité de l'air à l'extérieur de l'espace où le purificateur d'air est déployé est meilleure qu'une qualité de l'air à l'intérieur de l'espace où le purificateur d'air est déployé, que la qualité de l'air à l'extérieur de l'espace où le purificateur d'air est déployé est meilleure qu'une valeur prédéterminée, et que le purificateur d'air est dans un état de fonctionnement ; ou
la détermination de présenter une invitation de deuxième type s'il est déterminé selon les données de qualité de l'air qu'une qualité de l'air à l'intérieur de l'espace où le purificateur d'air est déployé est moindre qu'une valeur prédéterminée et que le purificateur d'air est dans un état de non fonctionnement ; ou
la détermination de présenter une invitation de troisième type si, après que le purificateur d'air est démarré et a fonctionné pendant une durée prédéterminée, il est déterminé selon les données de qualité de l'air qu'une qualité de l'air à l'intérieur de l'espace où le purificateur d'air est déployé est toujours moindre qu'une valeur prédéterminée,
dans lequel l'invitation de premier type est configurée pour inviter l'utilisateur à arrêter le purificateur d'air et à ouvrir une porte et une fenêtre, l'invitation de deuxième type est configurée pour inviter l'utilisateur à mettre en marche le purificateur d'air et à fermer la porte et la fenêtre, et l'invitation de troisième type est configurée pour inviter l'utilisateur à vérifier les états du purificateur d'air, de la porte et de la fenêtre, ce qui permet à un utilisateur de réaliser des opérations de commande correspondantes selon un type d'invitation pratique.

2. Procédé d'invitation à une purification de l'air selon la revendication 1, dans lequel les données de qualité de l'air sont acquises selon l'une quelconque des manières suivantes : l'acquisition des données de qualité de l'air à l'intérieur de l'espace où le purificateur d'air est déployé et des données de qualité de l'air à l'extérieur de l'espace où le purificateur d'air est déployé via un capteur de qualité de l'air ; l'acquisition en temps réel et via l'Internet des données de qualité de l'air à l'extérieur de l'espace où le purificateur d'air est déployé , et l'acquisition des données de qualité de l'air à l'intérieur de l'espace où le purificateur d'air est déployé via un capteur de qualité de l'air.

3. Procédé d'invitation à une purification de l'air selon la revendication 1 ou 2, dans lequel l'invitation est configurée selon l'un quelconque ou plusieurs des points suivants : une invitation en une journée, de multiples invitations en une journée, aucune invitation en une journée, et aucune invitation pendant une durée spécifiée.

4. Procédé d'invitation à une purification de l'air selon l'une quelconque des revendications 1 à 3, dans lequel l'équipement utilisateur étant l'un quelconque ou plusieurs parmi les équipements suivants : un téléphone mobile, un ordinateur, un terminal de retransmission numérique, un dispositif de messagerie, une console de jeux, une tablette, un dispositif médical, un équipement d'exercice et un assistant numérique personnel.

5. Équipement utilisateur comprenant un appareil d'invitation à une purification de l'air (201, 301), **caractérisé en ce que** l'appareil comprend :
un module d'acquisition (202, 302), configuré pour acquérir des données de qualité de l'air, les données de qualité de l'air comprenant les données suivantes : des données de qualité de l'air à l'intérieur d'un espace où un purificateur d'air est déployé, et des données de qualité de l'air à l'extérieur de l'espace où le purificateur d'air est déployé ; et
un module de détermination (203, 303), configuré pour déterminer s'il faut présenter une invitation selon les données de qualité de l'air,
un module d'invitation (204, 304), configuré pour envoyer des informations d'invitation correspondantes lorsqu'il est déterminé qu'il faut présenter une invitation,
dans lequel l'équipement utilisateur est apte à être connecté à, ou comprend, un module de commande (205, 305), le module de commande (205, 305) étant configuré pour réaliser des opérations de commande selon une instruction d'un utilisateur,
dans lequel l'équipement utilisateur est connecté d'une manière filaire ou d'une manière sans fil au purificateur d'air,
dans lequel le module de détermination (203, 303) détermine qu'il faut présenter une invitation de premier type s'il est déterminé selon les données de qualité de l'air qu'une qualité de l'air à l'extérieur de l'espace où le purificateur d'air est déployé est meilleure qu'une qualité de l'air à l'intérieur de l'espace où le purificateur d'air est déployé, que la qualité de l'air à l'extérieur de l'espace où le purificateur d'air est déployé est meilleure qu'une valeur prédéterminée, et que le purificateur d'air est dans un état de fonctionnement ; ou
détermine qu'il faut présenter une invitation de deuxième type s'il est déterminé selon les données de qualité de l'air qu'une qualité de l'air à l'intérieur de l'espace où le purificateur d'air est déployé est moindre qu'une valeur prédéterminée et que le purificateur d'air est dans un état de non fonctionnement ; ou
détermine de présenter une invitation de troisième type, après que le purificateur d'air est démarré et a fonctionné pendant une durée prédéterminée, il est déterminé selon les données de qualité de l'air qu'une qualité de l'air à l'intérieur de l'espace où le purificateur d'air est déployé est toujours moindre qu'une valeur prédéterminée,
dans lequel l'invitation de premier type est configurée pour inviter l'utilisateur à arrêter le purificateur d'air et à ouvrir une porte et une fenêtre, l'invitation de deuxième type est configurée pour inviter l'utilisateur à mettre en marche le purificateur d'air et à fermer la porte et la fenêtre, et l'invitation de troisième type est configurée pour inviter l'utilisateur à vérifier les états du purificateur d'air, de la porte et de la fenêtre.

6. Équipement utilisateur selon la revendication 5, dans lequel les données de qualité de l'air sont acquises selon l'une quelconque des manières suivantes : l'acquisition, par le module d'acquisition (202, 302), des données de qualité de l'air à l'intérieur de l'espace où le purificateur d'air est déployé et des données de qualité de l'air à l'extérieur de l'espace où le purificateur d'air est déployé via un capteur de qualité de l'air ; l'acquisition en temps réel et via l'Internet, par le module d'acquisition (202, 302), des données de qualité de l'air à l'extérieur de l'espace où le purificateur d'air est déployé , et l'acquisition, par le module d'acquisition (202, 302), des données de qualité de l'air à l'intérieur de l'espace où le purificateur d'air est déployé via un capteur de qualité de l'air.

7. Équipement utilisateur selon la revendication 5 ou 6, dans lequel l'invitation est configurée selon l'un quelconque ou plusieurs des points suivants : une invitation en une journée, de multiples invitations en une journée, aucune invitation en une journée, et aucune invitation pendant une durée spécifiée.

8. Programme d'ordinateur, incluant des instructions pour l'exécution des étapes d'un procédé d'invitation à une purification de l'air selon l'une quelconque des revendications 1 à 4 sur un équipement utilisateur.

9. Support d'enregistrement lisible par un ordinateur et ayant, enregistré sur celui-ci, un programme d'ordinateur selon la revendication 8.
